# EUROPEAN PATENT SPECIFICATION

(11) **EP 4 650 638 B1**
(45) Date of publication and mention of the grant of the patent: **30.09.2026**
(21) Application number: 24176012.3
(22) Date of filing: 15.05.2024
(51) Int. Cl.: F16L 3/06, F16L 3/10, F16L 3/233, F16L 3/237, H02G 3/32, B64D 37/32, B64D 37/00

(54) **CLAMP FOR CLAMPING A WIRE ON A PIPE, ASSOCIATED BREAK DETECTION ARRANGEMENT, FUEL DISTRIBUTION SYSTEM, AIRCRAFT AND METHOD OF CLAMPING A WIRE ON A PIPE**
KLEMME ZUM KLEMMEN EINES DRAHTES AUF EIN ROHR, ZUGEHÖRIGE BRUCHDETEKTIONSANORDNUNG, KRAFTSTOFFVERTEILUNGSSYSTEM, FLUGZEUG UND VERFAHREN ZUM KLEMMEN EINES DRAHTS AUF EINEM ROHR
PINCE DE SERRAGE D'UN FIL SUR UNE CANALISATION, AGENCEMENT DE DÉTECTION DE RUPTURE, SYSTÈME DE DISTRIBUTION DE CARBURANT, AÉRONEF ET PROCÉDÉ DE SERRAGE D'UN FIL SUR UNE CANALISATION

(43) Date of publication of application: 19.11.2025
(73) Proprietor: Airbus Operations GmbH, 21129 Hamburg (DE)
(72) Inventor: Petersen, Lauritz, 21129 Hamburg (DE)
(74) Representative: Airbus Germany

(56) References cited:
- DE-A1- 102009 026 109
- GB-A- 1 388 502
- US-A- 5 219 134
- US-A1- 2014 248 086

## Description

The present disclosure relates to a clamp for clamping a wire on a pipe. The disclosure also relates to a break detection arrangement comprising such a clamp, to fuel distribution system comprising such a break detection arrangement and to an aircraft comprising such a fuel distribution system.

The present disclosure further relates to a method of clamping a wire on a pipe in a fuel installation system as above mentioned.

In the domain of clamps it is known that clamps have to be easy to install and have to provide a good clamping of wires on pipes while remaining easy to manufacture. This is even more important for clamps that are configured to be used for clamping break detection wires on fuel pipes, since positioning of the wire on the pipe is critical. Easy manufacturing and installation of the clamps is also important to ensure an easy integration of such clamps in the manufacturing of break detection arrangements for fuel pipes.

Until now, and in order to achieve this, it has been known to use clamps comprising several different clamping elements. One of the clamping element of such a clamp is configured for receiving the wire and is attached to the other clamping elements to clamp the wire on the pipe. Such clamps are known, for example , from GB1388502A or US2014248086A1.

Such a solution is not entirely satisfying since the clamp comprises several distinct elements, rendering the manufacturing of the clamp difficult. This also makes the installation of such clamps difficult, which increases the risks of inaccurate positioning of the clamp on the pipe, and thus of the wire relative to the pipe.

An object of the present invention is therefore to provide a clamp for clamping a wire on a pipe, which is easy to manufacture and install.

To this end, the invention relates to a clamp for clamping a wire on a pipe, the clamp comprising:
- a first clamping element; and
- a second clamping element;
both the first and second clamping elements being identical, each of the first and second clamping elements comprising:
- a male connection portion, defining a passage configured for receiving the wire;
- a female connection portion, defining a lumen configured for receiving the male connection portion of the other of the first and second clamping elements; and
- a cooperation portion, connecting the male and female connection portions and configured to cooperate with the pipe to hold the clamp on the pipe.

Such a clamp comprising such identical first and second clamping elements is especially advantageous since the manufacturing of the clamp consists in the manufacturing of two identical clamping elements. Such a clamp is also, due to its simplicity, especially easy to install.

According to other advantageous aspects of the invention, the clamp comprises one or more of the following features taken alone or according to all technically possible combinations:
- the male connection portion of each of the first and second clamping elements is configured to be snapped in the female connection portion of the other of the first and second clamping elements, the clamp being movable between:
   - an installation configuration, wherein the male connection portions of the first and second clamping elements are disengaged from the female connection portions of the first and second clamping elements; and
   - an installed configuration, wherein the male connection portions of the first and second clamping elements are snapped in the female connection portions of the first and second clamping elements;
- each of the first and second clamping elements define a junction plane, the first and second clamping elements being configured to cooperate one with another along their respective junction planes,
   wherein the male connection portion and the female connection portion of each clamping elements are both elongated perpendicularly to the junction plane of said element and protrude on a same side of said junction plane;
- the cooperation portion of each clamping elements comprises a cooperation strip and a support of the male connection portion, the support of the male connection portion extending in the continuity of the male portion and defining with the male portion the passage configured for receiving the wire, the cooperation strip extending substantially along a helicoidal curve between the female connection portion and the support of the male connection portion;
- the cooperation portion comprises a cooperation pad, the cooperation pad being configured for cooperating with the pipe;
- the cooperation portion comprises a plurality of angle markings, each angle marking being configured to identify a relative angle between the clamp and the pipe; and
- the clamp is configured for clamping a break detection wire on a fuel pipe.

The invention also relates to a break detection arrangement comprising at least one detection wire and at least one clamp as above presented.

According to other advantageous aspects of the invention, the break detection arrangement comprises one or more of the following features taken alone or according to all technically possible combinations:
- the break detection arrangement comprises a plurality of clamps, wherein the lumens and passages defined by the female and male connection portions of the clamping elements of each of the clamps are aligned; and
- the break detection arrangement comprises a first and a second detection wires, the first detection wire being received in the male connection portion of the first clamping element and the second detection wire being received in the male connection portion of the second clamping element.

The invention also relates to a fuel distribution system comprising a fuel pipe and a break detection arrangement as above presented.

According to other advantageous aspects of the invention, the break detection arrangement comprises one or more of the following features taken alone or according to all technically possible combinations:
- the fuel distribution system further comprises a control unit, the control unit comprising a detection module, configured for detecting a break of the wire; and
- the control unit further comprises a control module, connected to the detection module, and configured to control a stopping of distribution of fuel in the pipe if the detection module is detecting a break of the detection wire.

The invention also relates to an aircraft comprising a fuel distribution system as above presented, wherein the wire of the fuel distribution system is arranged in an engine burst area of the aircraft.

The invention also relates to a method of clamping a wire on a pipe in a fuel distribution system as above presented, comprising the steps of:
- providing a pipe, at least one wire, and at least one clamp as above presented;
- positioning the pipe between the first and second clamping elements of the clamp;
- engaging the male portion of each of the first and second clamping elements in the female portions of each of the first and second clamping elements; and
- introducing the detection wire in the passage of the male portion of one of the first or second clamping elements.

The invention will be better understood when reading the following description, which is given solely by way of example and with reference to the appended drawings, in which:
- Figure 1 is a schematic representation of a fuel distribution system of an aircraft, comprising break detection arrangement in which clamps according to the invention are represented;
- Figure 2 is a schematic representation of a portion of the fuel distribution system of figure 1, presenting one of the clamps in more detail;
- Figure 3 is another schematic view of the portion of the fuel distribution system presented in figure 2;
- Figure 4 is another schematic view of the portion of the fuel distribution system presented in figures 2 and 3;
- Figure 5 schematic view one of the clamping elements of the clamp illustrated in figures 1 to 4; and

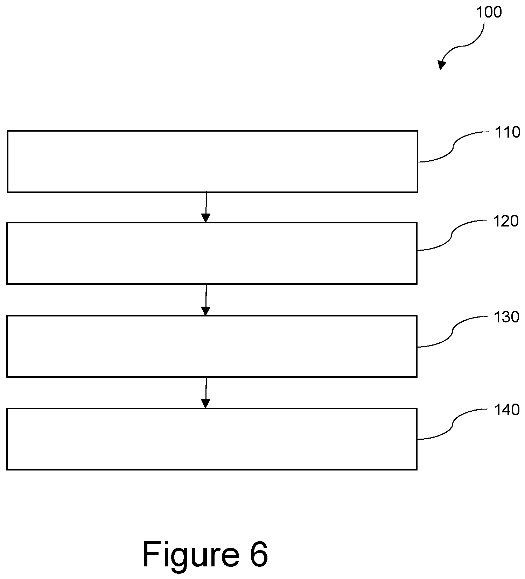

- Figure 6 is a schematic a flow chart of the steps of a method of clamping a wire on a pipe in the fuel installation presented in figures 1 to 4.

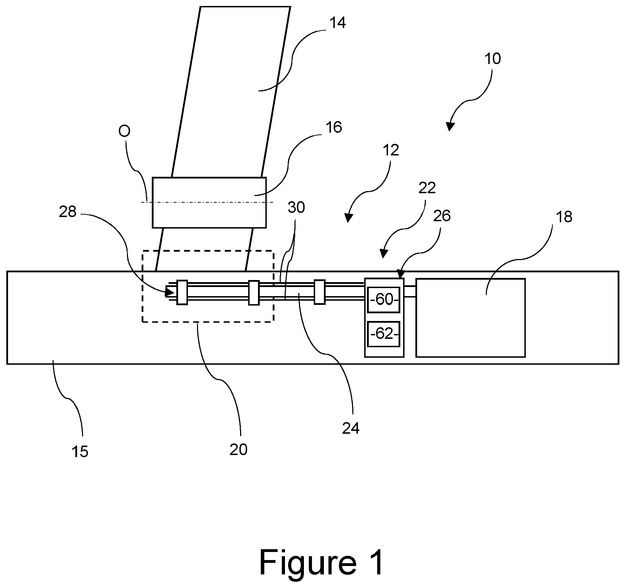

As illustrated in Figure 1, an aircraft 10 comprises a fuel distribution system 12.

The aircraft 10 is for example an airplane and for example an airliner.

As presented on figure 1, the aircraft 10 further comprises wings 14 (only one wing being illustrated for clarity purposes), a fuselage 15 and comprises at least one engine 16. In the example of figure 1, the engine 16 is installed on the wing 14. The aircraft further comprises for example a fuel tank 18.

The engine 16 is for example a turbofan. In other examples, the engine 16 is for example a turboprop of a propfan.

As illustrated in figure 1, the aircraft 10 comprises an engine burst area 20. The engine burst area is for example defined as a portion of the aircraft which is exposed to fragments of the engine 16, for example in case of uncontained engine failure. It is here understood that an uncontained engine failure is a failure of the engine 16 for which fragments of the engine escape a containment (non-referenced) provided by the engine, or in which there is no containment for the fragments and in which the fragments escape the engine. Such fragments correspond for example to portions of the blades of the turbine and/or compressor of the engine 16 that are projected, for example following ingestion of foreign object debris by the engine 16. As presented on figure 1, the engine burst area 20 is for example adjacent to the engine 16. The engine burst area extends for example radially around the engine 16, around a rotation axis O of the engine.

In the example of figure 1, the engine burst area 20 corresponds to a portion of the fuselage 15 facing a radial projection of the engine. In other words, the engine burst area 20 presented in figure 1 is a portion of the fuselage 15 which could be exposed to engine fragment projection in case of uncontained engine failure.

As presented in figure 1, the fuel distribution system 12 is connected to the fuel tank 18. The fuel distribution system 12 is for example configured to distribute fuel from the fuel tank 18 of the aircraft 10 to a component of the aircraft 10 which is consuming fuel. In an example, the component consuming fuel is the engine 16 and the fuel distribution system 12 is configured for distributing fuel from the fuel tank 18 to the engine 16. In another non illustrated embodiment, the fuel distribution system 12 is configured for distributing fuel from the fuel tank 18 to another engine (non-illustrated) of the aircraft 10.

The fuel distribution system 12 comprises a break detection arrangement 22, a pipe 24 and for example comprises a control unit 26.

The pipe 24 is for preferably a fuel pipe. In this description, the terms fuel pipe and fuel pipe are therefore used to designate the pipe 24.

The pipe 24 is for example connected to the fuel tank 18 and defines a passage (non-referenced) for transporting fuel from the fuel tank 18.

An external diameter D of the fuel pipe 24 is for example comprised between 20 and 150 mm.

As this will be presented in more details later on, the break detection arrangement 22 is for example arranged on the fuel pipe 24. The break detection arrangement 22 is further for example configured to be connected to the control unit 26.

As this will be presented in more details later on, the break detection arrangement 22 comprises at least one clamp 28 and at least one wire 30, the wire 30 being preferably a break detection wire. In this description, the terms break detection wire, detection wire and wire are therefore used to referrer to the wire 30.

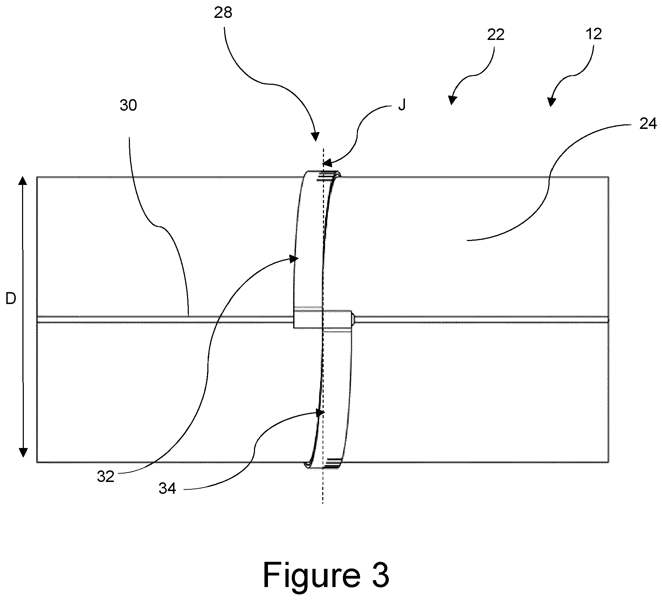

In particular, in the example of figures 1 to 5, the break detection arrangement 22 comprises two break detection wires 30, referenced 30A and 30B. One understands that in such an example, the two break detection wires 30A, 30B can either be two distinct wires or simply two distinct portion of a same wire.

In other non-represented examples, the break detection arrangement 22 comprises only one detection wire.

The break detection wire 30 is preferably arranged in the engine burst area 20 of the aircraft.

In particular, as this will be presented in more details later, the break detection wire 30 is for example connected to the control unit such that the control unit 26 detects a break of the break detection wire 30, if the break detection wire 30 is sectioned by fragments resulting from an uncontained engine failure.

In the example of figure 1, the break detection arrangement 22 comprises three clamps 28. In other non-represented examples, the break detection arrangement 22 comprises between 1 and 40 clamps.

Each clamp 28 is for example configured for clamping the break detection wire 30 on the fuel pipe 24.

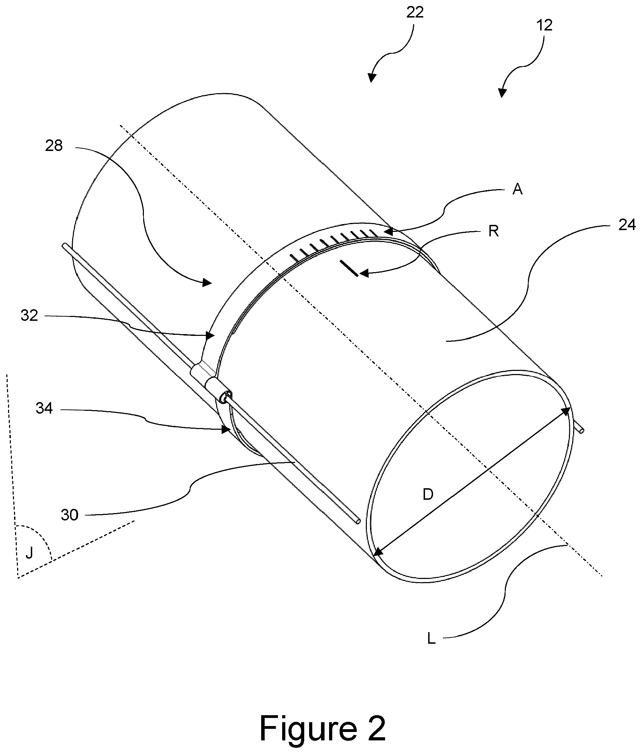

As visible from figures 2 to 4, each clamp 28 comprises a first clamping element 32 and a second clamping element 34.

The first clamping element 32 and the second clamping element 34 are identical. In particular, one understand by identical that the first clamping element 32 can be used as the second clamping element 34 and conversely.

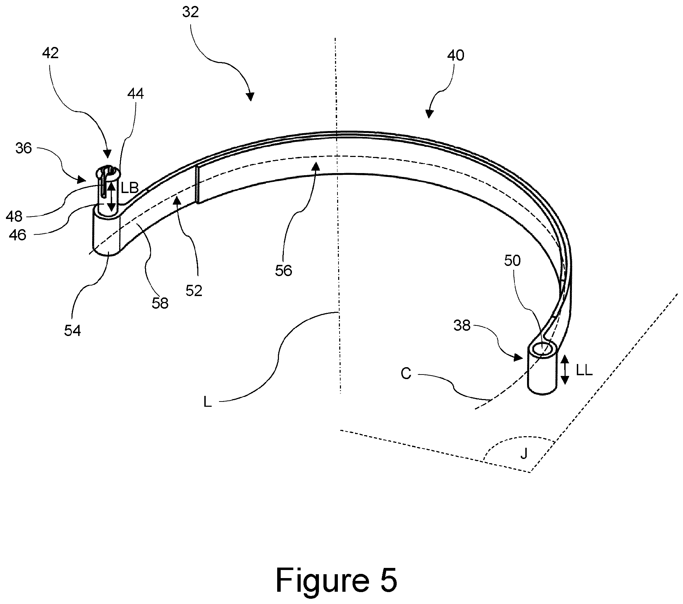

In particular, the clamping element illustrated in figure 5 is referenced as a first clamping element 32, but could this clamping element also be used/referenced as a second clamping element 34.

As this will be presented in more details later, the first clamping element 32 and the second clamping element 34 are for example configured to cooperate with each other, for example for clamping the at least one break detection wire 30 on the fuel pipe 24.

In particular, each of the first 32 and second 34 clamping elements define for example a junction plane J. The first 32 and second 34 clamping elements are for example configured to cooperate together along their respective junction plane J. In particular, as visible from figures 2 to 4, when the first 32 and second 34 clamping elements are cooperating, that is for example when they are connected to each other, the junction planes J of the first 32 and second 34 clamping elements are coplanar.

As illustrated from figure 5 for the first clamping element 32, each of the first 32 and second 34 clamping elements comprise a male connection portion 36, a female connection portion 38 and a cooperation portion 40. In this description, the male connection portion 36 is also referred to as male portion 36 and the female connection portion 38 is also referred to as female portion 38.

In an example, the male portion 36, the female portion 38 and the cooperation portion 40 are integral.

As illustrated in figure 5, the male connection portion 36 and the female connection portion 38 of each clamping elements 32, 34 are for example both elongated perpendicularly to the junction plane J of said clamping element 32, 34. The male connection portion 36 and the female connection portion 38 of each clamping elements 32, 34 are for example protruding on a same side of the junction plane J of the clamping element 32, 34.

As visible from figure 5, the male portion 36 defines a passage 42 configured for receiving a wire. In particular, the passage 42 is configured for receiving the break detection wire 30.

In the example presented on figures 2 to 5, the passage 42 is formed by an orifice having a closed contour. The break detection wire 30 then has for example to be inserted in such a passage 42 along a longitudinal direction of the passage to be received by the passage 42.

In another non illustrated example, the passage 42 is formed by a profile which is laterally opened. For example, the passage 42 is formed by a C-shaped profile. In such an example, the break detection wire 30 can for example be laterally snapped in the passage 42 to be received by the passage 42.

The male portion 36 is for example configured to be snapped in the female portion 38 of another of the clamping elements 32, 34.

To this end, and as illustrated in figure 5, the male portion 36 is for example elongated, for example perpendicularly to the junction plane J, and comprises for example a head 44 and a body 46, the body being arranged between the head 44 and the cooperation portion 40. In the example of figure 5, the male portion 36 further comprises a slit 48, extending along the elongation direction of the male portion 36, allowing the male portion 36 to be snapped on the female portion 38 of another of the of the clamping elements 32, 34.

As visible from figure 5, the female portion 38 defines a lumen 50 configured for receiving the male portion 36 of another clamping element 32, 34. In particular, in a clamp 30, the lumen 50 of the female connection portion 38 of one of the first 32 and second 34 clamping elements is configured for receiving the male connection portion 36 of the other of the first 32 and second clamping 34 elements.

A length LL of the lumen 50 is for example comprised between 4mm and 20mm. The length LL of the lumen 50 corresponds for example to a length of the female connection portion 38 taken perpendicularly to the junction plane J.

The lumen 50 is then for example configured for receiving a male connection portion 36 in which is received a break detection wire 30.

A length LB of the body 46 of the male portion 36 for example corresponds to the length LL of the lumen 50 to ensure a proper snapping of the male connection portion 36 on the female connection portion 38.

In the example presented on figures 2 to 5, the lumen 50 is formed by an orifice having a closed contour. The break detection wire 30 then has for example to be inserted in such a lumen 50 along a longitudinal direction of the lumen 50 to be received by the lumen 50.

In another non illustrated example, the lumen 50 is formed by a profile being laterally open. For example, the lumen 50 is formed by a C-shaped profile. In such an example, the break detection wire 30 can for example be laterally snapped in the lumen 50 to be received by the lumen 50.

As presented above, the female connection portion 38 is configured so that the male connection portion 36 can be engaged with the female connection portion 38.

In particular, as illustrated on figures 2 to 4, the male connection portion 36 of each of the first 32 and second 34 clamping elements is configured to be snapped in the female connection portion 38 of the other of the first 32 and second 34 clamping elements.

The clamp 28 is then moveable between an installation position and an installed position.

In particular, the male connection portions 36 of the first 32 and second 34 clamping elements are disengaged from the female 38 connection portions of the first 32 and second 34 clamping elements when the clamp is in its installation position. In other words, in the installation position, the first 32 and second 34 clamping elements are not fastened together by the male 36 and female 38 connection portions.

The male connection portions 36 of the first 32 and second 34 clamping elements are snapped in the female 38 connection portions of the first 32 and second 34 clamping elements when the clamp is in its installed position. In other words, in the installed position, the first 32 and second 34 clamping elements are fastened together by the male 36 and female 38 connection portions. In figure 2 to 4, the clamp 28 is in particular illustrated in its installed position.

For example, when the break detection arrangement 22 comprises a plurality of clamps 28, the lumen 50 and passages 42 defined by the first 32 and second 34 clamping elements of each of the clamps 28 are for example aligned. The break detection wire 30 received in the passages 42 is then for example substantially straight.

Furthermore, for example, and as presented on figure 2 to 4, when the break detection arrangement 22 comprises two break detection wires 30, namely a first 30A and a second detection wire 30B, the first detection wire 30A received in the male portion 36 of the first clamping element 32 and the second detection 30B wire being received in the male portion 36 of the second clamping element 34.

The cooperation portion 40 connects the male 36 and female 38 portions and is configured to cooperate with the fuel pipe 24 to hold the clamp 28 on the fuel pipe 24.

As presented on figure 5, the cooperation portion 40 comprises for example a cooperation strip 52 and a support 54 of the male connection portion 36. The cooperation further comprises for example a cooperation pad 56.

In the example presented on figures 2 to 5, the male connection portion 36, the female connection portion 38, the cooperation strip 52 and the support 54 of the male connection portion are for example integral and are for example made of plastic such as for example polyvinyl chloride.

As illustrated in figure 5, the support 54 of the male connection portion 36 extends for example in the continuity of the male connection portion 36.

For example the support 54 of the male connection portion 36 protrudes on an opposite side of the junction plane J as the male connection portion 36.

For example, the support 54 of the male connection portion 36 defines with the male portion 36 the passage 42 configured for receiving the wire.

As presented above, the passage 42 can either be formed by an orifice having a closed contour or be formed by a profile which is laterally opened such that the support 54 is either forming such a closed contour or forms a laterally opened profile.

As visible from figures 2 to 5, the cooperation strip 52 extends substantially along a helicoidal curve C between the female connection 38 portion and the support 54 of the male connection portion 36.

The cooperation strip 52 is in particular configured to be wounded around the fuel pipe 24 along the helicoidal curve C.

The helicoidal curve C extends longitudinally around a longitudinal axis L. For example, and as visible from figure 2, when the clamp 28 is installed on the fuel pipe 24, the longitudinal axis L of the helicoidal curve correspond to a central axis of the fuel pipe 24.

The helicoidal curve C has for example a constant diameter which substantially corresponds to the external diameter D of the fuel pipe.

Furthermore, a pitch of the helicoidal curve C is for such that a longitudinal component of the curve C corresponds to the length of the lumen LL of the female portion 38 and/or the length of the body LB of the male portion 36, for each half revolution of the helicoidal curve C around its longitudinal axis.

As visible from figures 2 to 5, the cooperation strip 52 extends for example along a portion of helicoidal curve C corresponding to substantially half a revolution of the helicoidal curve.

As visible on figure 5, the cooperation pad 56 is arranged on the cooperation strip and is configured for cooperating with the fuel pipe 24. As visible from figure 5, the cooperation pad 56 is for example arranged on a concave face 58 of the cooperation strip 52.

In particular, when the clamp 28 is installed on the fuel pipe 24, the cooperation pad 56 is arranged between the cooperation strip 52 and the fuel pipe 24 and is for example pressed by the cooperation strip 52 on the fuel pipe 24.

The cooperation pad 56 is for example made of an elastomer.

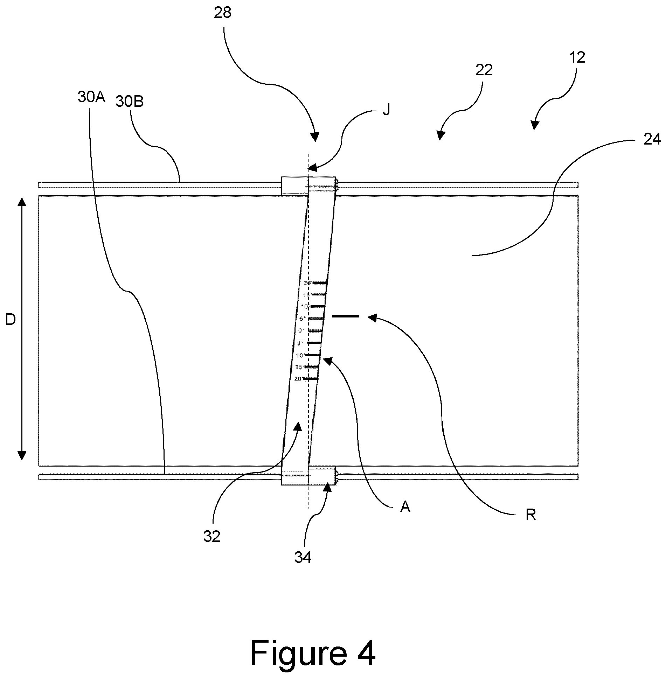

As visible from figures 2 and 4, the cooperation portion 40, and for example the cooperation strip 52, comprises for example a plurality of angle markings A.

Each angle marking is for example configured to identify a relative angle between the clamp 28 and the fuel pipe 24. For example, the fuel pipe 24 further comprises to that end at least one reference marking R. The relative angle between the clamp 28 and the fuel pipe 24 is for example deduced from the relative alignment between at least one of the plurality of angle markings and the at least one reference marking R.

As illustrated on figure 1, the control unit 26 comprises for example a detection module 60 and a control module 62.

The detection module 60 is for example connected to the break detection wire 30 and is for example configured for detecting a break of the break detection wire 30.

The control module 62 is for example connected to the detection module 60 and is configured to control a stopping of distribution of fuel in the fuel pipe 24 if the detection module 60 is detecting a break of the break detection wire 30. To that end, the control module 60 is for example connected to a valve (non-represented) and/or a pump (non-represented), and is for example configured for closing the valve and/or stopping the pump when the detection module 60 detects a break of the break detection wire 30.

A method 100 of clamping a wire on a pipe in a fuel distribution system 12 as presented above will now be described.

In a providing step 110, a fuel pipe 24, at least one detection wire 30, and at least one clamp 28 are provided.

In a positioning step 120, the fuel pipe 24 is positioned between the first 32 and second 34 clamping elements of the clamp 28. In other words, the first 32 and second 34 clamping elements of the clamp 28 are installed around the fuel pipe 24.

In an introducing step 130, the break detection wire 30 is introduced in the passage 42 of the male portion 36 of one of the first 32 or second 34 clamping elements and in the lumen 50 of the female portion 38 of the other of the of the first 32 or second 34 clamping elements.

In an engaging step 140, the male portions 36 of each of the first 32 and second 34 clamping elements are engaged in the female 38 portions of each of the first 32 and second 34 clamping elements.

It is understood that the engaging step 140 can either take place after the introducing step 130 of before the introducing step 130.

As seen above, the clamp 28 herein described is especially advantageous due to its simple manufacturing and its simple installation.

Furthermore, such clamp 28, due to the snapping made possible between its male 36 and female 38 portions, makes it possible to install the clamp 28 on a fuel pipe 24 without any tooling.

The geometry of each the first 32 and second 34 clamping portions further contributes in making the manufacturing of the clamp 28 easier.

The presence of a cooperation pad 56 is also especially advantageous to ensure a proper positioning of the clamp 28 on the fuel pipe 24 and to ensure that the clamp 28 remains in such a proper positioning. This in turns ensures a proper positioning of the break detection wire 30 relatively to the fuel pipe 24, which ensures a better detection of debris that could damage the fuel pipe 24. The clamp 28 therefore increase the safety of operation of the aircraft 10.

The angle markings A further contributes in improving the positioning of the clamp 28 and thus of the break detection wire 30, to improve detection of debris that could damage the fuel pipe 24.

The use of a control unit 26 as presented above is further especially advantageous to interpret the breaking of the breaking detection wire 30 and to take measures as a consequence of such a breaking, improving safety of operation of the aircraft 10.

## Claims

1. Clamp (28) for clamping a wire (30) on a pipe (24), the clamp (28) comprising
- a first clamping element (32); and
- a second clamping element (34);
both the first (32) and second (34) clamping elements being identical, each of the first (32) and second (34) clamping elements comprising:
- a male connection portion (36), defining a passage (42) configured for receiving the wire (30);
- a female connection portion (38), defining a lumen (50) configured for receiving the male connection portion (36) of the other of the first (32) and second (34) clamping elements; and
- a cooperation portion (40), connecting the male (36) and female (38) connection portions and configured to cooperate with the pipe (24) to hold the clamp (28) on the pipe (24).

2. Clamp (28) according to claim 1, wherein the male connection portion (36) of each of the first (32) and second (34) clamping elements is configured to be snapped in the female connection portion (38) of the other of the first (32) and second (34) clamping elements, the clamp (28) being movable between:
- an installation configuration, wherein the male connection portions (36) of the first (32) and second (34) clamping elements are disengaged from the female connection portions (38) of the first (32) and second (34) clamping elements; and
- an installed configuration, wherein the male connection portions (36) of the first (32) and second (34) clamping elements are snapped in the female connection portions (38) of the first (32) and second (34) clamping elements.

3. Clamp (28) according to claim 1 or 2, wherein each of the first (32) and second (34) clamping elements define a junction plane (J), the first (32) and second (34) clamping elements being configured to cooperate one with another along their respective junction planes (J),
wherein the male connection portion (36) and the female connection portion (38) of each clamping elements (32, 34) are both elongated perpendicularly to the junction plane (J) of said element (32, 34) and protrude on a same side of said junction plane (J).

4. Clamp (28) according to any of the preceding claims, wherein the cooperation portion (40) of each clamping elements (32, 34) comprises a cooperation strip (52) and a support (54) of the male connection portion (36), the support (54) of the male connection portion (36) extending in the continuity of the male portion (36) and defining with the male portion (36) the passage (42) configured for receiving the wire (30), the cooperation strip (52) extending substantially along a helicoidal curve (C) between the female connection portion (38) and the support (54) of the male connection portion (36).

5. Clamp (28) according to any of the preceding claims, wherein the cooperation portion (40) comprises a cooperation pad (56), the cooperation pad (56) being configured for cooperating with the pipe (24).

6. Clamp (28) according to any of the preceding claims, wherein the cooperation portion (40) comprises a plurality of angle markings (A), each angle marking (A) being configured to identify a relative angle between the clamp (28) and the pipe (24).

7. Clamp (28) according to any of the preceding claims, wherein the clamp (28) is configured for clamping a break detection wire (30) on a fuel pipe (24).

8. Break detection arrangement (22) comprising at least one detection wire (30) and at least one clamp (28) according to any of the claims 1 to 7.

9. Break detection arrangement (22) according to claim 8, wherein the break detection arrangement (22) comprises a plurality of clamps (28), wherein the lumens (50) and passages (42) defined by the female (38) and male (36) connection portions of the clamping elements (32, 34) of each of the clamps (28) are aligned.

10. Break detection arrangement (22) according to claim 8 or 9, wherein the break detection arrangement (22) comprises a first (30A) and a second (30B) detection wires, the first detection (30A) wire being received in the male connection portion (36) of the first clamping element (32) and the second detection wire (30B) being received in the male connection portion (36) of the second clamping element (34).

11. Fuel distribution system (12) comprising a fuel pipe (24) and a break detection arrangement (22) according to any of the claims 8 to 10.

12. Fuel distribution system (12) according to claim 11, further comprising a control unit (26), the control unit (26) comprising a detection module (60), configured for detecting a break of the wire (30).

13. Fuel distribution system according to claim 12, wherein control unit (26) further comprises a control module (62), connected to the detection module (60), and configured to control a stopping of distribution of fuel in the pipe (24) if the detection module is detecting a break of the detection wire (30).

14. Aircraft (10) comprising a fuel distribution system (12) according to any of the claims 11 to 13, wherein the wire (30) of the fuel distribution system (12) is arranged in an engine burst area (20) of the aircraft (10).

15. Method (100) of clamping a wire (30) on a pipe (24) in a fuel distribution system (12) according to any of the claims 11 to 13, comprising the steps of:
- providing (110) a pipe (24), at least one wire (30), and at least one clamp (28) according to any of the claims 1 to 7;
- positioning (120) the pipe (24) between the first (32) and second (34) clamping elements of the clamp (28);
- engaging (130) the male portion (36) of each of the first (32) and second (34) clamping elements in the female portions (38) of each of the first (32) and second (34) clamping elements; and
- introducing (140) the detection wire (30) in the passage (42) of the male portion (36) of one of the first (32) or second clamping (34) elements.

## Patentansprüche

1. Klemme (28) zum Klemmen eines Drahtes (30) an einem Rohr (24), wobei die Klemme (28) Folgendes umfasst:
- ein erstes Klemmelement (32); und
- ein zweites Klemmelement (34);
wobei sowohl das erste (32) als auch das zweite (34) Klemmelement identisch sind, wobei jedes des ersten (32) und zweiten (34) Klemmelements Folgendes umfasst:
- einen männlichen Verbindungsabschnitt (36), der einen Durchgang (42) definiert, der zur Aufnahme des Drahtes (30) konfiguriert ist;
- einen weiblichen Verbindungsabschnitt (38), der ein Lumen (50) definiert, das zur Aufnahme des männlichen Verbindungsabschnitts (36) des anderen des ersten (32) und zweiten (34) Klemmelements konfiguriert ist; und
- einen Zusammenwirkungsabschnitt (40), der den männlichen (36) und weiblichen (38) Verbindungsabschnitt verbindet und konfiguriert ist, um mit dem Rohr (24) zusammenzuwirken, um die Klemme (28) an dem Rohr (24) zu halten.

2. Klemme (28) nach Anspruch 1, wobei der männliche Verbindungsabschnitt (36) jedes des ersten (32) und zweiten (34) Klemmelements konfiguriert ist, um in den weiblichen Verbindungsabschnitt (38) des anderen des ersten (32) und zweiten (34) Klemmelements eingerastet zu werden, wobei die Klemme (28) beweglich ist zwischen:
- einer Installationskonfiguration, in der die männlichen Verbindungsabschnitte (36) des ersten (32) und zweiten (34) Klemmelements aus den weiblichen Verbindungsabschnitten (38) des ersten (32) und zweiten (34) Klemmelements gelöst sind; und
- einer installierten Konfiguration, in der die männlichen Verbindungsabschnitte (36) des ersten (32) und zweiten (34) Klemmelements in die weiblichen Verbindungsabschnitte (38) des ersten (32) und zweiten (34) Klemmelements eingerastet sind.

3. Klemme (28) nach Anspruch 1 oder 2, wobei jedes des ersten (32) und zweiten (34) Klemmelements eine Verbindungsebene (J) definiert, wobei das erste (32) und das zweite (34) Klemmelement so konfiguriert sind, dass sie entlang ihrer jeweiligen Verbindungsebenen (J) miteinander zusammenwirken,
wobei der männliche Verbindungsabschnitt (36) und der weibliche Verbindungsabschnitt (38) jedes Klemmelements (32, 34) beide senkrecht zur Verbindungsebene (J) des besagten Elements (32, 34) langgestreckt sind und auf einer selben Seite der besagten Verbindungsebene (J) hervorragen.

4. Klemme (28) nach einem der vorhergehenden Ansprüche, wobei der Zusammenwirkungsabschnitt (40) jedes Klemmelements (32, 34) einen Zusammenwirkungsstreifen (52) und einen Träger (54) des männlichen Verbindungsabschnitts (36) umfasst, wobei sich der Träger (54) des männlichen Verbindungsabschnitts (36) in der Kontinuität des männlichen Abschnitts (36) erstreckt und mit dem männlichen Abschnitt (36) den zur Aufnahme des Drahtes (30) konfigurierten Durchgang (42) definiert, wobei sich der Zusammenwirkungsstreifen (52) im Wesentlichen entlang einer schraubenförmigen Kurve (C) zwischen dem weiblichen Verbindungsabschnitt (38) und dem Träger (54) des männlichen Verbindungsabschnitts (36) erstreckt.

5. Klemme (28) nach einem der vorhergehenden Ansprüche, wobei der Zusammenwirkungsabschnitt (40) ein Zusammenwirkungspolster (56) umfasst, wobei das Zusammenwirkungspolster (56) zum Zusammenwirken mit dem Rohr (24) konfiguriert ist.

6. Klemme (28) nach einem der vorhergehenden Ansprüche, wobei der Zusammenwirkungsabschnitt (40) eine Vielzahl von Winkelmarkierungen (A) umfasst, wobei jede Winkelmarkierung (A) konfiguriert ist, um einen relativen Winkel zwischen der Klemme (28) und dem Rohr (24) zu identifizieren.

7. Klemme (28) nach einem der vorhergehenden Ansprüche, wobei die Klemme (28) zum Klemmen eines Bruchdetektionsdrahtes (30) an einem Kraftstoffrohr (24) konfiguriert ist.

8. Bruchdetektionsanordnung (22), umfassend mindestens einen Detektionsdraht (30) und mindestens eine Klemme (28) nach einem der Ansprüche 1 bis 7.

9. Bruchdetektionsanordnung (22) nach Anspruch 8, wobei die Bruchdetektionsanordnung (22) eine Vielzahl von Klemmen (28) umfasst, wobei die Lumen (50) und Durchgänge (42), die durch die weiblichen (38) und männlichen (36) Verbindungsabschnitte der Klemmelemente (32, 34) jeder der Klemmen (28) definiert sind, ausgerichtet sind.

10. Bruchdetektionsanordnung (22) nach Anspruch 8 oder 9, wobei die Bruchdetektionsanordnung (22) einen ersten (30A) und einen zweiten (30B) Detektionsdraht umfasst, wobei der erste Detektionsdraht (30A) im männlichen Verbindungsabschnitt (36) des ersten Klemmelements (32) aufgenommen ist und der zweite Detektionsdraht (30B) im männlichen Verbindungsabschnitt (36) des zweiten Klemmelements (34) aufgenommen ist.

11. Kraftstoffverteilungssystem (12), umfassend ein Kraftstoffrohr (24) und eine Bruchdetektionsanordnung (22) nach einem der Ansprüche 8 bis 10.

12. Kraftstoffverteilungssystem (12) nach Anspruch 11, ferner umfassend eine Steuereinheit (26), wobei die Steuereinheit (26) ein Detektionsmodul (60) umfasst, das zum Detektieren eines Bruchs des Drahtes (30) konfiguriert ist.

13. Kraftstoffverteilungssystem nach Anspruch 12, wobei die Steuereinheit (26) ferner ein Steuermodul (62) umfasst, das mit dem Detektionsmodul (60) verbunden ist und konfiguriert ist, um ein Stoppen der Verteilung von Kraftstoff im Rohr (24) zu steuern, wenn das Detektionsmodul einen Bruch des Detektionsdrahtes (30) detektiert.

14. Flugzeug (10), umfassend ein Kraftstoffverteilungssystem (12) nach einem der Ansprüche 11 bis 13, wobei der Draht (30) des Kraftstoffverteilungssystems (12) in einem Triebwerksberstbereich (20) des Flugzeugs (10) angeordnet ist.

15. Verfahren (100) zum Klemmen eines Drahtes (30) an ein Rohr (24) in einem Kraftstoffverteilungssystem (12) nach einem der Ansprüche 11 bis 13, umfassend die folgenden Schritte:
- Bereitstellen (110) eines Rohrs (24), mindestens eines Drahtes (30) und mindestens einer Klemme (28) nach einem der Ansprüche 1 bis 7;
- Positionieren (120) des Rohrs (24) zwischen dem ersten (32) und zweiten (34) Klemmelement der Klemme (28);
- Eingreifen (130) des männlichen Abschnitts (36) jedes des ersten (32) und zweiten (34) Klemmelements in die weiblichen Abschnitte (38) jedes des ersten (32) und zweiten (34) Klemmelements; und
- Einführen (140) des Detektionsdrahtes (30) in den Durchgang (42) des männlichen Abschnitts (36) von einem der ersten (32) oder zweiten (34) Klemmelemente.

## Revendications

1. Collier (28) pour serrer un fil (30) sur un tuyau (24), le collier (28) comprenant :
- un premier élément de serrage (32) ; et
- un second élément de serrage (34) ;
les premier (32) et second (34) éléments de serrage étant tous deux identiques, chacun des premier (32) et second (34) éléments de serrage comprenant :
- une partie de connexion mâle (36), définissant un passage (42) configuré pour recevoir le fil (30) ;
- une partie de connexion femelle (38), définissant une lumière (50) configurée pour recevoir la partie de connexion mâle (36) de l'autre des premier (32) et second (34) éléments de serrage ; et
- une partie de coopération (40), reliant les parties de connexion mâle (36) et femelle (38) et configurée pour coopérer avec le tuyau (24) afin de maintenir le collier (28) sur le tuyau (24).

2. Collier (28) selon la revendication 1, dans lequel la partie de connexion mâle (36) de chacun des premier (32) et second (34) éléments de serrage est configurée pour être encliquetée dans la partie de connexion femelle (38) de l'autre des premier (32) et second (34) éléments de serrage, le collier (28) étant mobile entre :
- une configuration d'installation, dans laquelle les parties de connexion mâle (36) des premier (32) et second (34) éléments de serrage sont dégagées des parties de connexion femelle (38) des premier (32) et second (34) éléments de serrage ; et
- une configuration installée, dans laquelle les parties de connexion mâle (36) des premier (32) et second (34) éléments de serrage sont encliquetées dans les parties de connexion femelle (38) des premier (32) et second (34) éléments de serrage.

3. Collier (28) selon la revendication 1 ou 2, dans lequel chacun des premier (32) et second (34) éléments de serrage définit un plan de jonction (J), les premier (32) et second (34) éléments de serrage étant configurés pour coopérer l'un avec l'autre le long de leurs plans de jonction (J) respectifs, dans lequel la partie de connexion mâle (36) et la partie de connexion femelle (38) de chaque élément de serrage (32, 34) sont toutes deux allongées perpendiculairement au plan de jonction (J) dudit élément (32, 34) et font saillie sur un même côté dudit plan de jonction (J).

4. Collier (28) selon l'une quelconque des revendications précédentes, dans lequel la partie de coopération (40) de chaque élément de serrage (32, 34) comprend une bande de coopération (52) et un support (54) de la partie de connexion mâle (36), le support (54) de la partie de connexion mâle (36) s'étendant dans la continuité de la partie mâle (36) et définissant avec la partie mâle (36) le passage (42) configuré pour recevoir le fil (30), la bande de coopération (52) s'étendant sensiblement le long d'une courbe hélicoïdale (C) entre la partie de connexion femelle (38) et le support (54) de la partie de connexion mâle (36).

5. Collier (28) selon l'une quelconque des revendications précédentes, dans lequel la partie de coopération (40) comprend un patin de coopération (56), le patin de coopération (56) étant configuré pour coopérer avec le tuyau (24).

6. Collier (28) selon l'une quelconque des revendications précédentes, dans lequel la partie de coopération (40) comprend une pluralité de repères angulaires (A), chaque repère angulaire (A) étant configuré pour identifier un angle relatif entre le collier (28) et le tuyau (24).

7. Collier (28) selon l'une quelconque des revendications précédentes, dans lequel le collier (28) est configuré pour serrer un fil de détection de rupture (30) sur un tuyau de carburant (24).

8. Agencement de détection de rupture (22) comprenant au moins un fil de détection (30) et au moins un collier (28) selon l'une quelconque des revendications 1 à 7.

9. Agencement de détection de rupture (22) selon la revendication 8, dans lequel l'agencement de détection de rupture (22) comprend une pluralité de colliers (28), dans lequel les lumières (50) et les passages (42) définis par les parties de connexion femelle (38) et mâle (36) des éléments de serrage (32, 34) de chacun des colliers (28) sont alignés.

10. Agencement de détection de rupture (22) selon la revendication 8 ou 9, dans lequel l'agencement de détection de rupture (22) comprend un premier (30A) et un second (30B) fils de détection, le premier fil de détection (30A) étant reçu dans la partie de connexion mâle (36) du premier élément de serrage (32) et le second fil de détection (30B) étant reçu dans la partie de connexion mâle (36) du second élément de serrage (34).

11. Système de distribution de carburant (12) comprenant un tuyau de carburant (24) et un agencement de détection de rupture (22) selon l'une quelconque des revendications 8 à 10.

12. Système de distribution de carburant (12) selon la revendication 11, comprenant en outre une unité de commande (26), l'unité de commande (26) comprenant un module de détection (60), configuré pour détecter une rupture du fil (30).

13. Système de distribution de carburant selon la revendication 12, dans lequel l'unité de commande (26) comprend en outre un module de commande (62), connecté au module de détection (60), et configuré pour commander un arrêt de la distribution de carburant dans le tuyau (24) si le module de détection détecte une rupture du fil de détection (30).

14. Aéronef (10) comprenant un système de distribution de carburant (12) selon l'une quelconque des revendications 11 à 13, dans lequel le fil (30) du système de distribution de carburant (12) est agencé dans une zone d'éclatement de moteur (20) de l'aéronef (10).

15. Procédé (100) de serrage d'un fil (30) sur un tuyau (24) dans un système de distribution de carburant (12) selon l'une quelconque des revendications 11 à 13, comprenant les étapes consistant à :
- fournir (110) un tuyau (24), au moins un fil (30), et au moins un collier (28) selon l'une quelconque des revendications 1 à 7 ;
- positionner (120) le tuyau (24) entre les premier (32) et second (34) éléments de serrage du collier (28) ;
- engager (130) la partie mâle (36) de chacun des premier (32) et second (34) éléments de serrage dans les parties femelles (38) de chacun des premier (32) et second (34) éléments de serrage ; et
- introduire (140) le fil de détection (30) dans le passage (42) de la partie mâle (36) de l'un des premier (32) ou second (34) éléments de serrage.
